# EUROPEAN PATENT SPECIFICATION

(11) **EP 4 439 076 B1**
(45) Date of publication and mention of the grant of the patent: **25.11.2026**
(21) Application number: 24167346.6
(22) Date of filing: 28.03.2024
(51) Int. Cl.: G01P 5/165, B64D 15/12, B64D 15/20, B64D 43/02

(54) **AIR DATA SENSOR STRUT ICE PROTECTION**
EISSCHUTZ FÜR DIE STREBE EINES LUFTDATENSENSORS
PROTECTION CONTRE LE GIVRE D'UNE ENTRETOISE DE CAPTEUR DE DONNÉES D'AIR

(30) Priority: 28.03.2023 IN 202341022883
(43) Date of publication of application: 02.10.2024
(73) Proprietor: Rosemount Aerospace Inc., Burnsville, MN 55306-4898 (US)
(72) Inventor: THANGAVEL, Sathish, 560087 Panathur, Bangalore (IN); JOHNSON, Paul R., Prior Lake, 55372 (US); BAJPAI, Shivanshu, 560064 Uelahanka Newtown, Bangalore (IN)
(74) Representative: Dehns

(56) References cited:
- EP-A2- 0 274 758
- CN-U- 215 591 010
- US-A1- 2019 383 848

## Description

### BACKGROUND

### 1. Field

The present disclosure relates to air data probes and sensors, and more particularly to ice protection for air data sensors on aircraft.

### 2. Description of Related Art

In aircraft, an icing component typically uses either an anti-icing or a de-icing system, depending upon the criticality of the part. Anti-icing systems keep a part ice free, e.g. for an entire flight. De-icing, on the other hand, removes the ice once it accretes on the part. Anti-icing systems are continuously powered during a flight whereas de-icing systems are activated only if the aircraft encounters inflight icing conditions. Examples of aircraft components that utilize anti-icing are piccolo tube heating for wing leading edges and air data probes, which are traditionally anti-iced by Joule heating using electric heaters. The pneumatic boots used at wing leading edges for propeller driven aircraft are an example of a de-ice application.

Air data probes are relatively high on the scale of critical comments for an aircraft to fly safely and they should be fully functional under icing conditions. So, typical air data probes use anti-icing system to avoid ice accretion on the more critical probe surfaces. The unprotected less critical probe surfaces such as aft struts can nonetheless accrete ice during inflight icing despite the anti-icing on the more critical probe surfaces. Severe ice growth on the unprotected probe surfaces, if allowed to continue long enough, e.g. on a flight long enough through airspace with icing conditions, can affect the aerodynamics which can eventually degrade the probe performance. One solution is to extending the anti-icing system to the aft strut to avoid the ice accretion while in flight, e.g. to maintain proper air data probe function for longer flights through icing conditions. This extra anti-icing increases the probe total power consumption in the flight cycle. Therefore, significant flight hours and multiple probes on a commercial aircraft collectively increase the engine fuel consumption to generate the additional anti-icing power required, or in electric/hybrid aircraft, the battery range will be reduced. Ice protection of air data sensors is disclosed in US 2019/383848 A1.

The conventional techniques have been considered satisfactory for their intended purpose. However, there is an ever present need for improved systems and methods for ice protection for air data sensors. This disclosure provides a solution for this need.

### SUMMARY

A method of ice protection is provided as defined by claim 1.

Maintaining de-icing in the deactivated state for the first duration can include allowing ice accretion on the aft portion of the air data sensor during the first duration. Activating de-icing for the second duration can include removing the ice accretion from the aft portion of the air data sensor. The method can include repeatedly switching between performing anti-icing without de-icing and performing anti-icing while de-icing during a flight mission.

Performing anti-icing can include activating an anti-icing heating element situated in the forward portion of the air data sensor. Activating de-icing can include activating a de-icing heating element situated in the aft portion of the air data sensor. The forward portion and the aft portion can be mutually exclusive portions of the air data sensor. The de-icing heating element can be arranged in an aft portion of a strut of the air data sensor. The anti-icing heating element can be arranged in a leading edge portion of the strut. The anti-icing heating element can also be arranged in a pitot probe extending forward from the strut.

The method can include detecting icing conditions, wherein activating de-icing for the second duration is performed in response to detecting the icing conditions. Detecting icing conditions can include receiving temperature data from at least one temperature sensor of the air data sensor indicative of a temperature drop. Detecting icing conditions can include receiving electrical current data from an anti-icing heating element of the air temperature sensor indicative of a temperature drop. Detecting icing conditions can include receiving ice detection data from at least one dedicated ice detector aboard an aircraft that is separate from the air data sensor indicative of icing conditions. The method can include detecting cessation of the icing conditions, and deactivating de-icing for a third duration after the second duration in response to detecting the cessation of the icing conditions, while continuing to perform anti-icing during the third duration.

A system is also provided as defined by claim 14.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an embodiment of a an air data sensor system constructed in accordance with the present disclosure, showing the separate forward and aft heating elements;
Fig. 2 is a logic flow diagram of a temperature sensor based control scheme for the aft heating element of Fig. 1;
Fig. 3 is a logic flow diagram of an electrical current based control scheme for the aft heating element of Fig. 1; and
Fig. 4 is a logic flow diagram of a dedicated ice detection based control scheme for the aft heating element of Fig. 1.

### DETAILED DESCRIPTION OF THE PREFERRED EMBODIMENTS

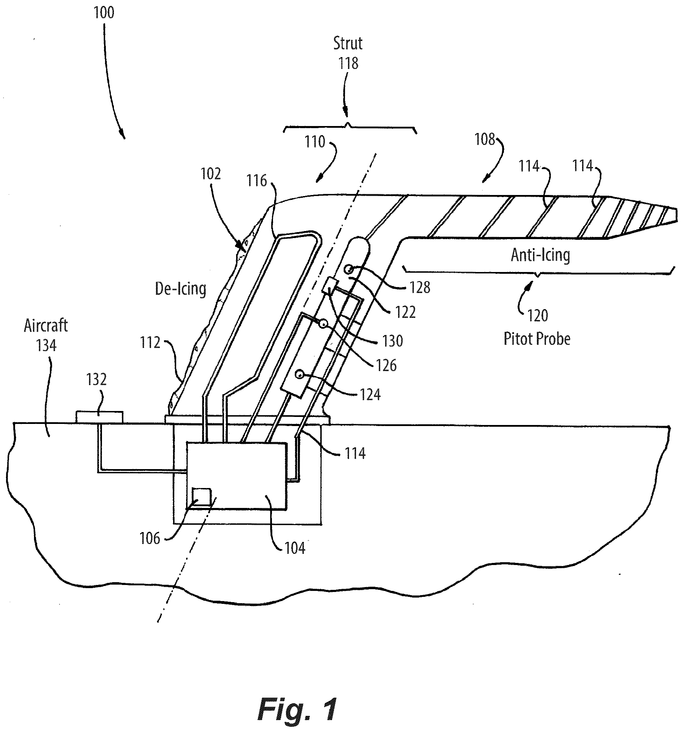

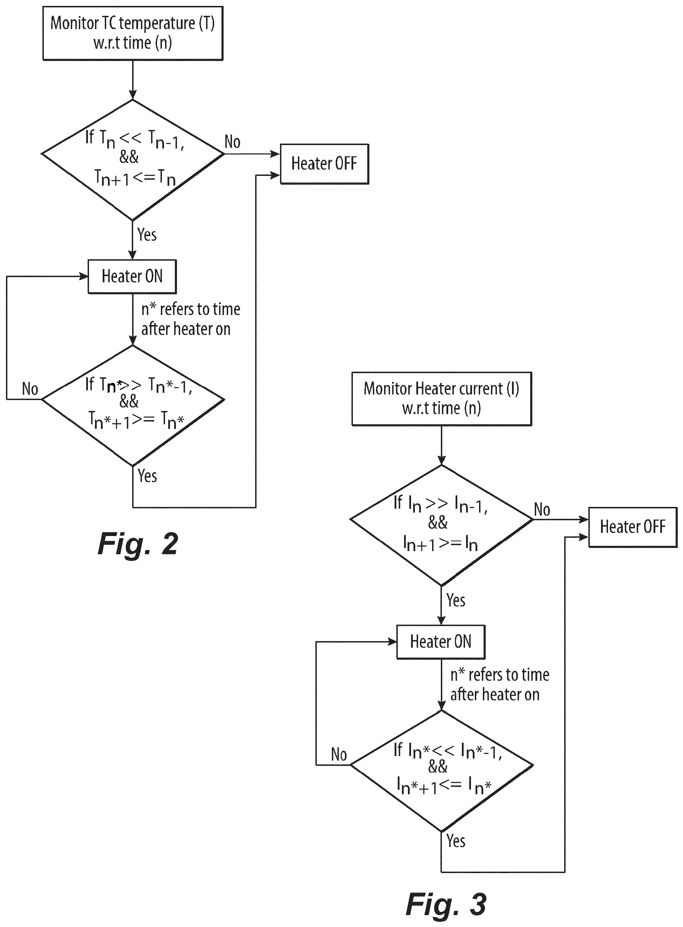

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2-4, as will be described. The systems and methods described herein can be used to activate and deactivate de-icing for a portion of an air data sensor conserve energy while also full time protecting another portion of the air data sensor with anti-icing.

The system 100 includes an air data sensor 102 including a controller 104 and machine readable instructions 106 configured to cause the controller 104 to perform a method of ice protection as described below on the air data sensor 102. The machine readable instructions 106 can be digital, e.g. stored in a computer memory, or can be in the form of dedicated analog or digital logic circuit components or any other suitable form of machine readable instructions.

A method of ice protection includes performing anti-icing on a forward portion 108 of the air data sensor 102 for a first duration while maintaining de-icing on an aft portion 110 of the air data sensor 102 in a deactivated state. The method includes activating de-icing on the aft portion 110 of the air data sensor 102 for a second duration while also performing anti-icing on the forward portion 108 of the air data sensor 102. During a mission, the anti-icing in the forward portion 108 remains powered on full time, whereas the de-icing turns on and off as needed in the aft portion 110.

Maintaining de-icing in the deactivated state for the first duration includes allowing ice accretion 112 to form on the aft portion 102 of the air data sensor during the first duration. Activating de-icing for the second duration includes removing the ice accretion 112 from the aft portion 110 of the air data sensor 102. The method includes repeatedly switching as needed between performing anti-icing without de-icing and performing anti-icing while de-icing during a flight mission.

Performing anti-icing includes activating an anti-icing heating element 114 situated in the forward portion 108 of the air data sensor 102. Activating de-icing includes activating a de-icing heating element 116 situated in the aft portion 110 of the air data sensor 102. The forward portion 108 and the aft portion 110 are mutually exclusive portions of the air data sensor 102, e.g. separated by the dashed line in Fig. 1, however the boundary between the forward and aft portions 108, 110 can be convoluted without departing from the scope of this disclosure. The de-icing heating element 116 is arranged in an aft portion of the strut 118 of the air data sensor 102. The anti-icing heating element 108 is arranged in a leading edge portion 122 of the strut 118 and in the pitot probe 120 extending forward from the strut 118.

The method includes detecting icing conditions, wherein activating de-icing for the second duration is performed in response to detecting the icing conditions. The method includes detecting cessation of the icing conditions, and deactivating de-icing for a third duration after the second duration in response to detecting the cessation of the icing conditions, while continuing to perform anti-icing during the third duration. Figs. 2-4 show three different logic schemes that can be used for the controller 104 to activate and deactivate the deicing heating element 116.

With reference to Figs. 1 and 2 together, detecting icing conditions includes receiving temperature data from at least one temperature sensor 124, 126, 128 of the air data sensor 102 indicative of a temperature drop. Fig. 2 shows logic the controller 104 of Fig. 1 can use for this technique of detecting icing conditions. While monitoring the temperature data from the at least one temperature sensor 124, 126, 128 if there is a large temperature drop indicated in the data (Tₙ << Tₙ₋₁) and if the temperature is not rising (Tₙ₊₁ <= Tₙ) then the de-icing heating element 116 is activated and remains activated because the large temperature drop is indicative of the presence of super cooled droplets. The de-icing heater element 116 can be deactivated upon a large rise in the temperature data (T_{n*} >> T_{n*-1}) indicative of cessation of presence of super cooled droplets, and if the temperature data is not showing a drop in temperature (T_{n*+1} >= T_{n*}).

With reference now to Figs. 1 and 3 together, detecting icing conditions can include the controller 104 receiving electrical current data, e.g. from a current sensor 130 connected to detect electrical current in the anti-icing heating element 114 of the air temperature sensor 102. A sudden rise in the electrical current drawn in the anti-icing heating element 114 is indicative of a temperature drop due to impingement of super cooled droplets onto the air data sensor 102. While monitoring the electrical current data from the at sensor 130, if there is a large temperature drop indicated in the electrical current data (Iₙ >> Iₙ₋₁) and if the temperature is not rising (Iₙ₊₁ >= Iₙ) then the controller 104 activates the de-icing heating element 116 keeps it activated because the large temperature drop is indicative of the presence of super cooled droplets. The controller 104 can deactivate the de-icing heater element 116 upon a large drop in the electrical current data (I_{n*} << I_{n*-1}) indicative of cessation of presence of super cooled droplets, and if the electrical current data is not showing a drop in temperature (I_{n*+1} <= I_{n*}).

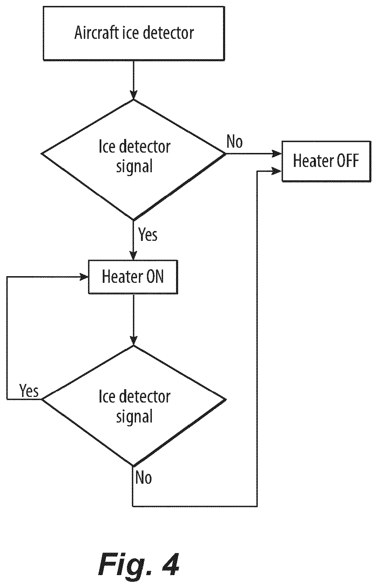

Referring now to Figs. 1 and 4 together, the controller 104 detecting icing conditions can include receiving ice detection data indicative of icing conditions from at least one dedicated ice detector 132 aboard the aircraft 134, wherein both the air data sensor 102 and the separate dedicate ice detector 132 are aboard the aircraft (134).

The controller 104 can keep the de-icing heating element 116 activated as long as there is no indication in the ice detection data that the icing conditions have ceased. The controller 104 can deactivate the de-icing can be deactivated upon receipt of ice detection data from the dedicated ice detector 132 indicative of cessation of presence of super cooled droplets.

Systems and methods as disclosed herein can provide various potential benefits including the following. Compared to traditional ice protection techniques, systems and methods as disclose herein have less power consumption in a flight cycle which reduces the fuel consumption and/or battery drain. The future air transport includes hybrid and/or fully electric aircraft. The systems and methods disclose herein can create a path to even use of a fully heated air data sensor in an electric aircraft were power for heating is a major concern. Using an aft de-icing heater, useful lifetime increases significant compared to traditional systems due to the ability for reduced duty of operation during flight

The methods and systems of the present disclosure, as described above and shown in the drawings, provide for selectively de-icing a portion of an air data sensor conserve energy while also full time protecting another portion of the air data sensor with anti-icing. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. A method of ice protection comprising:
performing anti-icing on a forward portion of an air data sensor (102) by operation of an anti-icing heating element (114) situated in the forward portion (108) of the air data sensor, for a first duration while maintaining de-icing, by a de-icing heating element (116) situated in an aft portion (110) of the air data sensor, of the aft portion (110) of the air data sensor in a deactivated state; and
activating de-icing, by the de-icing heating element, on the aft portion of the air data sensor for a second duration while also performing anti-icing, by the anti-icing heating element, on the forward portion (108) of the air data sensor.

2. The method as recited in claim 1, wherein maintaining de-icing in the deactivated state for the first duration includes allowing ice accretion on the aft portion of the air data sensor during the first duration.

3. The method as recited in claim 2, wherein activating de-icing for the second duration includes removing the ice accretion from the aft portion of the air data sensor.

4. The method as recited in any preceding claim, further comprising repeatedly switching between performing anti-icing without de-icing and performing anti-icing while de-icing during a flight mission.

5. The method as recited in any preceding claim, wherein performing anti-icing includes activating the anti-icing heating element (114) situated in the forward portion of the air data sensor, and wherein activating de-icing includes activating the de-icing heating element (116) situated in the aft portion of the air data sensor.

6. The method as recited in claim 5, wherein the forward portion and the aft portion are mutually exclusive portions of the air data sensor.

7. The method as recited in claim 6, wherein the de-icing heating element (116) is arranged in an aft portion of a strut (118) of the air data sensor, and wherein the anti-icing heating element (114) is arranged in a leading edge portion (122) of the strut.

8. The method as recited in claim 7, wherein the anti-icing heating element is also arranged in a pitot probe (120) extending forward from the strut.

9. The method as recited in any preceding claim, further comprising detecting icing conditions, wherein activating de-icing for the second duration is performed in response to detecting the icing conditions.

10. The method as recited in 9, wherein detecting icing conditions includes receiving temperature data from at least one temperature sensor (124, 126, 128) of the air data sensor indicative of a temperature drop.

11. The method as recited in claim 9, wherein detecting icing conditions includes receiving electrical current data from an anti-icing heating element of the air temperature sensor indicative of a temperature drop.

12. The method as recited in claim 9, wherein detecting icing conditions includes receiving ice detection data from at least one dedicated ice detector (132) aboard an aircraft (134) that is separate from the air data sensor indicative of icing conditions.

13. The method as recited in claim 9, further comprising:
detecting cessation of the icing conditions; and
deactivating de-icing for a third duration after the second duration in response to detecting the cessation of the icing conditions, while continuing to perform anti-icing during the third duration.

14. A system comprising:
an air data sensor (102) including an anti-icing heating element (114) situated in a forward portion (108) of the air data sensor, a de-icing heating element (116) situated in an aft portion (110) of the air data sensor, a controller (104) and machine readable instructions configured to cause the controller to perform the method of ice protection recited in any preceding claim on the air data sensor by activating or deactivating the de-icing element.

15. The system as recited in claim 14, wherein performing anti-icing includes activating the anti-icing heating element situated in the forward portion of the air data sensor, wherein activating de-icing includes activating the de-icing heating element situated in the aft portion of the air data sensor, wherein the de-icing heating element is arranged in an aft portion of a strut (118) of the air data sensor, wherein the anti-icing heating element is arranged in a leading edge portion (122) of the strut, and wherein the anti-icing heating element is also arranged in a pitot probe (120) extending forward from the strut.

## Patentansprüche

1. Verfahren zum Eisschutz, umfassend:
Durchführen eines Vereisungsschutzes an einem vorderen Abschnitt eines Luftdatensensors (102) durch Betrieb eines Vereisungsschutzheizelements (114), das in dem vorderen Abschnitt (108) des Luftdatensensors angeordnet ist, für eine erste Dauer, während eine Enteisung des hinteren Abschnitts (110) des Luftdatensensors durch ein Enteisungsheizelement (116), das in einem hinteren Abschnitt (110) des Luftdatensensors angeordnet ist, in einem deaktivierten Zustand aufrechterhalten wird; und
Aktivieren einer Enteisung an dem hinteren Abschnitt des Luftdatensensors durch das Enteisungsheizelement für eine zweite Dauer, während zugleich ein Vereisungsschutz an dem vorderen Abschnitt (108) des Luftdatensensors durch das Vereisungsschutzheizelement durchgeführt wird.

2. Verfahren nach Anspruch 1, wobei das Aufrechterhalten der Enteisung in dem deaktivierten Zustand für die erste Dauer das Zulassen eines Eisansatzes an dem hinteren Abschnitt des Luftdatensensors während der ersten Dauer umfasst.

3. Verfahren nach Anspruch 2, wobei das Aktivieren der Enteisung für die zweite Dauer das Entfernen des Eisansatzes von dem hinteren Abschnitt des Luftdatensensors umfasst.

4. Verfahren nach einem der vorhergehenden Ansprüche, ferner umfassend das wiederholte Umschalten zwischen dem Durchführen eines Vereisungsschutzes ohne Enteisung und dem Durchführen eines Vereisungsschutzes bei gleichzeitiger Enteisung während eines Flugeinsatzes.

5. Verfahren nach einem der vorhergehenden Ansprüche, wobei das Durchführen des Vereisungsschutzes das Aktivieren des Vereisungsschutzheizelements (114) umfasst, das in dem vorderen Abschnitt des Luftdatensensors angeordnet ist, und wobei das Aktivieren der Enteisung das Aktivieren des Enteisungsheizelements (116) umfasst, das in dem hinteren Abschnitt des Luftdatensensors angeordnet ist.

6. Verfahren nach Anspruch 5, wobei der vordere Abschnitt und der hintere Abschnitt einander ausschließende Abschnitte des Luftdatensensors sind.

7. Verfahren nach Anspruch 6, wobei das Enteisungsheizelement (116) in einem hinteren Abschnitt einer Strebe (118) des Luftdatensensors angeordnet ist und wobei das Vereisungsschutzheizelement (114) in einem Vorderkantenabschnitt (122) der Strebe angeordnet ist.

8. Verfahren nach Anspruch 7, wobei das Vereisungsschutzheizelement auch in einer Pitot-Sonde (120) angeordnet ist, die sich von der Strebe nach vorne erstreckt.

9. Verfahren nach einem der vorhergehenden Ansprüche, ferner umfassend das Erfassen von Vereisungsbedingungen, wobei das Aktivieren der Enteisung für die zweite Dauer als Reaktion auf das Erfassen der Vereisungsbedingungen durchgeführt wird.

10. Verfahren nach Anspruch 9, wobei das Erfassen von Vereisungsbedingungen das Empfangen von Temperaturdaten, die auf einen Temperaturabfall hinweisen, von mindestens einem Temperatursensor (124, 126, 128) des Luftdatensensors umfasst.

11. Verfahren nach Anspruch 9, wobei das Erfassen von Vereisungsbedingungen das Empfangen von elektrischen Stromdaten, die auf einen Temperaturabfall hinweisen, von einem Vereisungsschutzheizelement des Lufttemperatursensors umfasst.

12. Verfahren nach Anspruch 9, wobei das Erfassen von Vereisungsbedingungen das Empfangen von Eiserfassungsdaten, die auf Vereisungsbedingungen hinweisen, von mindestens einem dedizierten Eisdetektor (132) an Bord eines Luftfahrzeugs (134) umfasst, der von dem Luftdatensensor getrennt ist.

13. Verfahren nach Anspruch 9, ferner umfassend:
Erfassen eines Endes der Vereisungsbedingungen; und
Deaktivieren der Enteisung für eine dritte Dauer nach der zweiten Dauer als Reaktion auf das Erfassen des Endes der Vereisungsbedingungen, während der Vereisungsschutz während der dritten Dauer weiterhin durchgeführt wird.

14. System, umfassend:
einen Luftdatensensor (102), der ein Vereisungsschutzheizelement (114), das in einem vorderen Abschnitt (108) des Luftdatensensors angeordnet ist, ein Enteisungsheizelement (116), das in einem hinteren Abschnitt (110) des Luftdatensensors angeordnet ist, eine Steuerung (104) und maschinenlesbare Anweisungen umfasst, die dazu konfiguriert sind, die Steuerung zu veranlassen, das Verfahren zum Eisschutz nach einem der vorhergehenden Ansprüche an dem Luftdatensensor durch Aktivieren oder Deaktivieren des Enteisungselements durchzuführen.

15. System nach Anspruch 14, wobei das Durchführen des Vereisungsschutzes das Aktivieren des Vereisungsschutzheizelements umfasst, das in dem vorderen Abschnitt des Luftdatensensors angeordnet ist, wobei das Aktivieren der Enteisung das Aktivieren des Enteisungsheizelements umfasst, das in dem hinteren Abschnitt des Luftdatensensors angeordnet ist, wobei das Enteisungsheizelement in einem hinteren Abschnitt einer Strebe (118) des Luftdatensensors angeordnet ist, wobei das Vereisungsschutzheizelement in einem Vorderkantenabschnitt (122) der Strebe angeordnet ist und wobei das Vereisungsschutzheizelement auch in einer Pitot-Sonde (120) angeordnet ist, die sich von der Strebe nach vorne erstreckt.

## Revendications

1. Procédé de protection contre le givre comprenant :
la réalisation de l'antigivrage d'une partie avant d'un capteur de données d'air (102) par le fonctionnement d'un élément chauffant antigivrage (114) situé dans la partie avant (108) du capteur de données d'air, pendant une première durée tout en maintenant le dégivrage, par un élément chauffant de dégivrage (116) situé dans une partie arrière (110) du capteur de données d'air, de la partie arrière (110) du capteur de données d'air à l'état désactivé ; et
l'activation du dégivrage, par l'élément chauffant de dégivrage, sur la partie arrière du capteur de données d'air pendant une deuxième durée tout en réalisant également l'antigivrage, par l'élément chauffant antigivrage, sur la partie avant (108) du capteur de données d'air.

2. Procédé selon la revendication 1, dans lequel le maintien du dégivrage à l'état désactivé pendant la première durée comporte le fait de permettre l'accumulation de glace sur la partie arrière du capteur de données d'air pendant la première durée.

3. Procédé selon la revendication 2, dans lequel l'activation du dégivrage pour la deuxième durée comporte l'élimination de l'accumulation de glace de la partie arrière du capteur de données d'air.

4. Procédé selon l'une quelconque des revendications précédentes, comprenant en outre l'alternance répétée entre la réalisation de l'antigivrage sans dégivrage et la réalisation de l'antigivrage pendant le dégivrage au cours d'une mission de vol.

5. Procédé selon l'une quelconque des revendications précédentes, dans lequel la réalisation de l'antigivrage comporte l'activation de l'élément chauffant antigivrage (114) situé dans la partie avant du capteur de données d'air, et dans lequel l'activation du dégivrage comporte l'activation de l'élément chauffant de dégivrage (116) situé dans la partie arrière du capteur de données d'air.

6. Procédé selon la revendication 5, dans lequel la partie avant et la partie arrière sont des parties mutuellement exclusives du capteur de données d'air.

7. Procédé selon la revendication 6, dans lequel l'élément chauffant de dégivrage (116) est disposé dans une partie arrière d'une entretoise (118) du capteur de données d'air, et dans lequel l'élément chauffant antigivrage (114) est disposé dans une partie de bord d'attaque (122) de l'entretoise.

8. Procédé selon la revendication 7, dans lequel l'élément chauffant antigivrage est également disposé dans une sonde pitot (120) s'étendant vers l'avant à partir de l'entretoise.

9. Procédé selon l'une quelconque des revendications précédentes, comprenant en outre la détection des conditions de givrage, dans lequel l'activation du dégivrage pour la deuxième durée est réalisée en réponse à la détection des conditions de givrage.

10. Procédé selon la revendication 9, dans lequel la détection des conditions de givrage comporte la réception de données de température provenant d'au moins un capteur de température (124, 126, 128) du capteur de données d'air indiquant une baisse de température.

11. Procédé selon la revendication 9, dans lequel la détection des conditions de givrage comporte la réception de données de courant électrique provenant d'un élément chauffant antigivrage du capteur de température de l'air indiquant une chute de température.

12. Procédé selon la revendication 9, dans lequel la détection des conditions de givrage comporte la réception de données de détection de givre provenant d'au moins un détecteur de givre dédié (132) à bord d'un aéronef (134) qui est distinct du capteur de données d'air indiquant des conditions de givrage.

13. Procédé selon la revendication 9, comprenant en outre :
la détection de la cessation des conditions de givrage ; et
la désactivation du dégivrage pendant une troisième durée après la deuxième durée en réponse à la détection de la cessation des conditions de givrage, tout en continuant à réaliser l'antigivrage pendant la troisième durée.

14. Système comprenant :
un capteur de données d'air (102) comportant un élément chauffant antigivrage (114) situé dans une partie avant (108) du capteur de données d'air, un élément chauffant de dégivrage (116) situé dans une partie arrière (110) du capteur de données d'air, un dispositif de commande (104) et des instructions lisibles par machine configurées pour amener le dispositif de commande à réaliser le procédé de protection contre le givre selon une quelconque revendication précédente sur le capteur de données d'air en activant ou en désactivant l'élément de dégivrage.

15. Système selon la revendication 14, dans lequel la réalisation de l'antigivrage comporte l'activation de l'élément chauffant antigivrage situé dans la partie avant du capteur de données d'air, dans lequel l'activation du dégivrage comporte l'activation de l'élément chauffant de dégivrage situé dans la partie arrière du capteur de données d'air, dans lequel l'élément chauffant de dégivrage est disposé dans une partie arrière d'une entretoise (118) du capteur de données d'air, dans lequel l'élément chauffant antigivrage est disposé dans une partie de bord d'attaque (122) de l'entretoise, et dans lequel l'élément chauffant antigivrage est également disposé dans une sonde pitot (120) s'étendant vers l'avant à partir de l'entretoise.
